# EUROPEAN PATENT APPLICATION

(11) **EP 4 733 602 A1**
(43) Date of publication of application: **29.04.2026**
(21) Application number: 24209024.9
(22) Date of filing: 25.10.2024
(51) Int. Cl.: F15B 11/036, F15B 15/14, F15B 15/20, F15B 9/08

(54) **ACTUATOR SYSTEM**

(71) Applicant: Microtecnica S.r.l., 10126 Turin (IT)
(72) Inventor: MOLINELLI, Dario, Cernate, 20866 (IT); PARISOTTO, Luca, Quinto di Treviso, 31055 (IT); LANZONE, Francesco, Torino, 10134 (IT); EGISTO-ARTONI, Ettore, Milano, 20132 (IT)
(74) Representative: Casalonga

(57) **Abstract**

An actuator system (1) of an aircraft, the actuator system including an actuator (4) shaft with an input end (6) and an output end (8). The input end (6) receives an input force. The actuator system (1) includes an actuator housing (2). The actuator shaft (4) and the actuator housing (2) are coaxial along a longitudinal axis. The actuator shaft (4) and the actuator housing (2) form an input chamber (10), an intermediate chamber (12) and an output chamber (14) arranged to contain a pressurised hydraulic fluid. The actuator system (1) includes a valve member (16), that is coupled to the input end (6) via a centring connection (7). The centring connection accommodates misalignment between the input end (6) and the output end (8). The valve member (16) selectively controls the flow of the pressurised hydraulic fluid between the input chamber (10), intermediate chamber (12) and the output chamber (14).

## Description

### FIELD

The present disclosure relates to an actuator system, e.g. a hydraulically assisted actuator of an aircraft, in particular a hydraulically assisted actuator comprising channels to fluidly connect three hydraulic chambers.

### BACKGROUND

Hydraulically assisted actuators are designed to amplify a mechanical input force and may be used in mechanical systems in aircraft. During operation of a hydraulically assisted actuator, chambers of pressurised hydraulic fluid may be selectively coupled and decoupled to amplify an input force.

It is desired to provide an actuator that has stable characteristics when in operation, which may help ensure flight safety.

### SUMMARY

According to the present disclosure, there is provided an actuator system of an aircraft, the actuator system comprising:
an actuator shaft;
   wherein the actuator shaft comprises an input end and an output end;
   wherein the input end of the actuator shaft is arranged to receive an input force; and
an actuator housing;
   wherein the actuator shaft and the actuator housing are coaxial along a longitudinal axis;
   wherein the actuator shaft and the actuator housing are arranged to form an input chamber, an intermediate chamber and an output chamber;
      wherein the input chamber, the intermediate chamber and the output chamber are each arranged to contain a pressurised hydraulic fluid; wherein the actuator system further comprises:
a valve member;
   wherein the valve member is coupled to the input end of the actuator shaft via a centring connection;
      wherein the centring connection is arranged to accommodate misalignment between the input end and the valve member;
   wherein the valve member is arranged to selectively control the flow of the pressurised hydraulic fluid between the input chamber, intermediate chamber and the output chamber based on the input force.

According to the present disclosure, there is provided a method of operating an actuator system of an aircraft, the actuator system comprising:
an actuator shaft;
   wherein the actuator shaft comprises an input end and an output end;
an actuator housing;
   wherein the actuator shaft and the actuator housing are coaxial with a longitudinal axis;
   wherein the actuator shaft and the actuator housing are arranged to form an input chamber, an intermediate chamber and an output chamber; and
a valve member;
   wherein the valve member is coupled to the input end of the actuator shaft via a centring connection;
   wherein the centring connection is arranged to accommodate misalignment between the valve member;
the method comprising:
the actuator shaft receiving an input force;
the input chamber, the intermediate chamber and the output chamber containing a pressurised hydraulic fluid; and
the valve member selectively controlling the flow of the pressurised hydraulic fluid between the input chamber, intermediate chamber and the output chamber based on the input force.

It will be appreciated that all of the features described herein relating to the actuator system apply equally to the method for operating the actuator system, and vice versa.

The valve member and actuation shaft are arranged such that when the pressurised hydraulic fluid is pressurised and the actuator shaft receives an input force, the valve member is actuated and fluid selectively flows between the input chamber, intermediate chamber and the output chamber. By selectively controlling the flow of the pressurised hydraulic fluid between the input chamber, the intermediate chamber and the output chamber, the input force may be amplified.

In some examples, the actuator system is arranged to be connected to a hydraulic system. In some examples, the actuator system comprises the hydraulic system. In some examples, the hydraulic system is arranged to provide the pressurised hydraulic fluid to the actuator system.

In some examples, the valve member is coaxial with the longitudinal axis. In some examples, the input chamber is coaxial with the actuator shaft. In some examples, the input chamber is arranged radially about the actuator shaft. For example, the input chamber may extend circumferentially around the actuator shaft, e.g. with an annular cross section. In some examples, the input chamber is arranged between the actuator shaft and the actuator housing.

In some examples, the intermediate chamber is coaxial with the actuator shaft. In some examples, the intermediate chamber is arranged radially about the actuator shaft. For example, the intermediate chamber may extend circumferentially around the actuator shaft, e.g. with an annular cross section. In some examples, the intermediate chamber is arranged between the actuator shaft and the actuator housing.

In some examples, the output chamber is coaxial with the actuator shaft. In some examples, the output chamber is arranged radially about the actuator shaft. For example, the output chamber may extend circumferentially around the actuator shaft, e.g. with an annular cross section. In some examples, the output chamber is arranged between the actuator shaft and the actuator housing.

In some examples, the input end is coaxial with the longitudinal axis. In some examples, the output end is coaxial with the longitudinal axis.

In some examples, the centring connection is coaxial with the longitudinal axis. By coupling the valve member and the input end via the centring connection, the actuator system may have improved operation, even with concentricity errors.

In some examples, the centring connection is arranged to transmit the input force from the input end to the valve member. In some examples, the centring connection is arranged to transmit the input force between the input end and the output end. This may help to couple the input force between the input end and the output end, via the centring connection.

In some examples, the misalignment between the input end and the valve member comprises an axial misalignment. In some examples, the axial misalignment is the input end arranged to be displaced by the input force in a direction non-parallel to the longitudinal axis. In some examples, the axial misalignment is the input end arranged to be displaced by the input force in a direction non-coaxial with, e.g. offset from, the longitudinal axis. In some examples, the axial misalignment is the input end being non-coaxial with, e.g. offset from, the valve member. In some examples, the axial misalignment is the input end being non-parallel with the valve member. By arranging the centring connection to accommodate misalignment between the input end and the valve member, the centring connection may transmit the input force to the valve member without the actuator system ceasing.

In some examples, the centring connection is arranged to transmit the input force along or parallel to the longitudinal axis. In some examples, the centring connection is arranged to transmit the input force to the valve member along or parallel to the longitudinal axis.

In some examples, the input end is arranged to displace the valve member when the input end receives an input force. In some examples, the centring connection is arranged to actuate the valve member along or parallel to the longitudinal axis when the input end receives the input force. By arranging the centring connection to transmit the input force to the valve member, the input force may be transmitted to the valve member without the actuator system ceasing.

In some examples, the centring connection comprises a connector component. In some examples, the connector component comprises a first connecting pin. In some examples, the first connecting pin couples the input end and the connector component. In some examples, the first connecting pin is provided at the end of the connector component proximal to the input end. In some examples, the first connecting pin is a pivot between the input end and the connector component.

In some examples, the connector component is arranged to rotate about the first connecting pin. In some examples, the connector component is arranged to rotate relative to the input end about the first connecting pin. In some examples, the connector component is arranged to rotate (e.g. about the first connecting pin) in a direction perpendicular to the longitudinal axis. By providing a first connecting pin, the connector component may rotate in a direction perpendicular to the longitudinal axis and may provide a wider tolerance range for misalignment in the actuator system.

In some examples, the connector component comprises a second connecting pin. In some examples, the second connecting pin couples the valve member and the connector component. In some examples, the second connecting pin is provided at the end of the connector component distal from the input end. In some examples, the second connecting pin is a pivot between the valve member and the connector component. In some examples, the second connecting pin extends in a direction perpendicular to the first connecting pin.

In some examples, the connector component is arranged to rotate about the second connecting pin. In some examples, the connector component is arranged to rotate relative to the valve member about the second connecting pin. In some examples, the connector component is arranged to rotate (e.g. about the second connecting pin) in a direction perpendicular to the longitudinal axis. By providing a second connecting pin, the connector component may rotate in a direction perpendicular to the longitudinal axis and may provide a wider tolerance range for misalignment in the actuator system.

In some examples, the input force is in a first direction (e.g. in the direction towards the output end, away from the input end), e.g. in a direction parallel to (e.g. coaxial with) the longitudinal axis. In some examples, the actuator shaft is arranged to move in the first direction, e.g. in a direction parallel to (e.g. coaxial with) the longitudinal axis when the input force is in the first direction.

In some examples, the valve member is arranged to be actuated in the first direction when the input force is in the first direction. In some examples, the valve member is arranged to selectively couple the pressurised hydraulic fluid in the input chamber and the pressurised hydraulic fluid in the intermediate chamber when the input force is in the first direction. By selectively coupling the pressurised hydraulic fluid in the input chamber and the pressurised hydraulic fluid in the intermediate chamber, the input force in the first direction may be amplified.

In some examples, the input force is in a second direction (e.g. in the direction towards the input end, away from the output end), e.g. in a direction parallel to (e.g. coaxial with) the longitudinal axis. In some examples, the actuator shaft is arranged to move in the second direction, e.g. in a direction parallel to (e.g. coaxial with) the longitudinal axis when the input force is in the second direction.

In some examples, the valve member is arranged to be actuated in the second direction when the input force is in the second direction. In some examples, the valve member is arranged to selectively couple the pressurised hydraulic fluid in the input chamber and the pressurised hydraulic fluid in the output chamber when the input force is in the second direction. By selectively coupling the pressurised hydraulic fluid in the input chamber and the pressurised hydraulic fluid in the output chamber, the input force in the second direction may be amplified.

In some examples, the actuator shaft comprises an internal valve chamber. In some examples, the internal valve chamber is coaxial with the longitudinal axis.

In some examples, the internal valve chamber is in selective fluid communication with the input chamber, the intermediate chamber and the output chamber. In some examples, the internal valve chamber is arranged in selective fluid communication with the input chamber. In some examples, the internal valve chamber is arranged in selective fluid communication with the output chamber. In some examples, the internal valve chamber is arranged in fluid communication with the intermediate chamber.

In some examples, the internal valve chamber is arranged to control the fluid communication between the input chamber, the intermediate chamber and the output chamber. In some examples, the valve member is coaxial with the internal valve chamber. In some examples, the internal valve chamber is coaxial with the longitudinal axis. For example, the internal valve chamber may extend circumferentially around the longitudinal axis, e.g. with a substantially annular cross section.

In some examples, the valve member and the internal valve chamber are arranged to selectively control the fluid communication between the input chamber and the intermediate chamber. In some examples, the valve member and the internal valve chamber are arranged to selectively control the fluid communication between the input chamber and the output chamber. By arranging the valve member with the internal valve chamber to selectively connect the input chamber, the intermediate chamber and the output chamber, the valve member may control the amplification of the input force.

In some examples, the actuator shaft comprises a first fluid path. In some examples, the first fluid path is arranged to selectively fluidly connect the internal valve chamber and the input chamber. In some examples, the valve member is arranged to selectively open and close the first fluid path. In some examples, the internal valve chamber comprises the first fluid path.

In some examples, the valve member is arranged to open the first fluid path when the valve member is actuated in the first direction. By opening the first fluid path, pressurised hydraulic fluid may flow between the intermediate chamber and the input chamber. By opening the first fluid path, the pressure of the pressurised hydraulic fluid in the input chamber may increase, when the pressure of the pressurised hydraulic fluid in the intermediate chamber is greater than the pressure of the pressurised hydraulic fluid in the input chamber.

In some examples, the actuator shaft comprises a second fluid path. In some examples, the second fluid path is arranged to selectively fluidly connect the input chamber and the output chamber. In some examples, the valve member is arranged to selectively open and close the second fluid path. In some examples, the internal valve chamber comprises the second fluid path.

In some examples, the valve member is arranged to open the second fluid path when the valve member is actuated in the second direction. By opening the second fluid path, pressurised hydraulic fluid may flow between the input chamber and the output chamber. By opening the second fluid path, the pressure of the hydraulic fluid in the output chamber may increase, when the pressure of the pressurised hydraulic fluid in the input chamber is greater than the pressure of the pressurised hydraulic fluid in the output chamber.

In some examples, the actuator shaft comprises a third fluid path. In some examples, the third fluid path is arranged to fluidly connect the intermediate chamber and the internal valve chamber.

In some examples, the pressurised hydraulic fluid in the intermediate chamber is pressurised to a pressure between 50 bar and 500 bar, e.g. between 100 bar and 300 bar, e.g. between 150 bar and 250 bar, e.g. approximately 207 bar. In some examples, the pressure of the pressurised hydraulic fluid in the input chamber is approximately half the pressure of the pressurised hydraulic fluid in the intermediate chamber. In some examples, the hydraulic fluid in the output chamber is unpressurised, e.g. the pressure of the pressurised hydraulic fluid is approximately equal to atmospheric pressure. By arranging the pressure of the pressurised hydraulic fluid in the intermediate chamber to be greater than the pressure of the pressurised hydraulic fluid in the input chamber, the input force may be amplified. By arranging the pressure of the pressurised hydraulic fluid in the input chamber to be greater than the pressure of the pressurised hydraulic fluid in the output chamber, the input force may be amplified.

In some examples, the actuator shaft comprises a first flange. In some examples, the first flange extends radially from the longitudinal axis. In some examples, the first flange is arranged to substantially separate the pressurised hydraulic fluid in the input chamber and the pressurised hydraulic fluid in the intermediate chamber. In some examples, the first flange is arranged to form a seal between the actuator shaft and the actuator housing. By arranging the first flange between the input chamber and the intermediate chamber, the pressurised hydraulic fluid in the input chamber may not mix with the pressurised hydraulic fluid in the intermediate chamber. By arranging the first flange between the input chamber and the intermediate chamber, the pressurised hydraulic fluid in the input chamber may be at a different pressure to the pressurised hydraulic fluid in the intermediate chamber.

In some examples, the first flange comprises a first flange seal. In some examples, the first flange seal is arranged to form a seal between the actuator shaft and the actuator housing. In some examples, the first flange seal is arranged to form a seal between the first flange and the actuator housing. In some examples, the first flange seal is a gasket. In some examples, the first flange seal is an O-ring.

In some examples, the actuator shaft comprises a second flange. In some examples, the second flange extends radially from the longitudinal axis. In some examples, the second flange is arranged to substantially separate the pressurised hydraulic fluid in the intermediate chamber and the pressurised hydraulic fluid in the output chamber. In some examples, the second flange is arranged to form a seal between the actuator shaft and the actuator housing. By arranging the second flange between the intermediate chamber and the output chamber, the pressurised hydraulic fluid in the intermediate chamber may not mix with the pressurised hydraulic fluid in the output chamber. By arranging the second flange between the intermediate chamber and the output chamber, the pressurised hydraulic fluid in the intermediate chamber may be at a different pressure to the pressurised hydraulic fluid in the output chamber.

In some examples, the second flange comprises a second flange seal. In some examples, the second flange seal is arranged to form a seal between the actuator shaft and the actuator housing. In some examples, the second flange seal is arranged to form a seal between the second flange and the actuator housing. In some examples, the second flange seal is a gasket. In some examples, the second flange seal is an O-ring.

In some examples, the input chamber, intermediate chamber and the output chamber are arranged axially adjacent along the longitudinal axis. In some examples, the input chamber is arranged proximal to the input end. In some examples, the output chamber is arranged proximal to the output end. In some examples, the intermediate chamber is arranged adjacent to the input chamber and the output chamber, e.g. between the input chamber and the output chamber.

In some examples, the input chamber extends circumferential around the actuator shaft e.g. with a generally annular cross section. In some examples, the intermediate chamber extends circumferential around the actuator shaft, e.g. with a generally annular cross section. In some examples, the output chamber extends circumferential around the actuator shaft, e.g. with a generally annular cross section.

In some examples, the pressurised hydraulic fluid in the input chamber is arranged to exert a first force on the first flange. In some examples, the first force is in the first direction. In some examples, the pressurised hydraulic fluid in the intermediate chamber is arranged to exert a second force on the first flange. In some examples, the second force is in the second direction. In some examples, the pressurised hydraulic fluid in the intermediate chamber is arranged to exert a third force on the second flange. In some examples, the third force is in the first direction. In some examples, the third force is equal in magnitude to the second force. In some examples, the pressurised fluid in the output chamber is arranged to exert a fourth force on the second flange. In some examples, the fourth force is in the second direction.

In some examples, the magnitude of the first force is arranged to be equal to the magnitude of the second force when the input force is zero, e.g. the net force on the first flange is zero. In some examples, the magnitude of the third force is equal to the magnitude of the fourth force when the input force is zero, e.g. the net force on the second flange is zero.

In some examples, the magnitude of the first force is arranged to increase when the input force is in the first direction. For example, the valve member may be arranged to selectively couple (fluidly connect) the input chamber and the intermediate chamber, when the input force is in the first direction, such that pressurised hydraulic fluid may flow from the intermediate chamber into the input chamber, when the pressure of the pressurised hydraulic fluid in the intermediate chamber is greater than the pressure of the pressurised hydraulic fluid in the input chamber. This may increase the pressure of the pressurised hydraulic fluid in the input chamber. By arranging the first force to increase when the input force is in the first direction, a resultant force may act on the actuator shaft (e.g. on the first flange) and the input force may be amplified.

In some examples, the magnitude of the fourth force is arranged to increase when the input force is in the second direction. In some examples, the magnitude of the first force is arranged to decrease when the input force is in the second direction. For example, the valve member may be arranged to selectively couple (fluidly connect) the output chamber and the input chamber, when the input force is in the second direction, such that pressurised hydraulic fluid may flow from the input chamber into the output chamber, when the pressure of the pressurised hydraulic fluid in the input chamber is greater than the pressure of the pressurised hydraulic fluid in the output chamber. This may decrease the pressure in the input chamber. This may increase the pressure of the pressurised hydraulic fluid in the output chamber. By arranging the first force to decrease when the input force is in the second direction, a resultant force may actor on the actuator shaft (e.g. on the first flange) and the input force may be amplified. By arranging the fourth force to increase when the input force is in the second direction, a resultant force may act on the actuator shaft (e.g. on the second flange) and the input force may be amplified.

In some examples, the input end comprises an inner input shaft. In some examples, the input end comprises an outer input shaft. In some examples, the inner input shaft is coaxial with the longitudinal axis. In some examples, the outer input shaft is coaxial with the longitudinal axis. In some examples, the inner input shaft and the outer input shaft are coaxial.

In some examples, the inner input shaft is coupled to the valve member. In some examples, the inner input shaft is coupled to the valve member via the centring connection. In some examples, the inner input shaft is arranged to receive the input force. In some examples, the inner input shaft is arranged to transmit the input force to the valve member via the centring connection.

In some examples, the diameter of the outer input shaft is greater than the diameter of the inner input shaft.

In some examples, the inner input shaft comprises an input rod. In some examples, the input rod is coupled to the valve member. In some examples, the input rod is coaxial with the longitudinal axis. In some examples, the valve member is coupled to the input rod via the centring connection. In some examples, the inner input rod is arranged to transmit the input force to the valve member via the centring connection. In some examples, the centring connection is coaxial with the longitudinal axis. By coupling the valve member with the input rod via the centring connection, the actuator system may have improved operation, even with concentricity errors.

In some examples, the actuator shaft comprises a locking component. In some examples, the locking component is coaxial with the longitudinal axis. In some examples, the locking component is arranged to be displaced by the pressurised hydraulic fluid in the intermediate chamber. In some examples, the locking component is arranged to be displaced in a direction parallel to the longitudinal axis. In some examples, the locking component is arranged to move reciprocally between a locked position and an unlocked position.

In some examples, the locking component is arranged to be displaced towards the unlocked position by the pressurised hydraulic fluid in the intermediate chamber. In some examples, the inner input shaft and the outer input shaft are arranged to slide relative to each other when the locking component is in the unlocked position. In some examples, the locking component is arranged to be displaced in the first direction to the unlocked position. In some examples, the locking component is arranged to be displaced by the pressurised hydraulic fluid in the intermediate chamber, such that the inner input shaft and the outer input shaft are decoupled, when there is (e.g. an increased pressure of) pressurised hydraulic fluid in the intermediate chamber.

In some examples, the actuator shaft comprises a biasing member. In some examples the biasing member is coaxial with the longitudinal axis. In some examples, the biasing member is arranged to bias the locking component, e.g. towards a locked position.

In some examples, the inner input shaft and the outer input shaft are arranged to be fixed relative to each other when the locking component is in the locked position. In some examples, the locking component is arranged to be displaced in the second direction to the locked position. In some examples, the biasing member comprises a spring.

In some examples, the biasing member is arranged to bias the locking component, such that the inner input shaft and the outer input shaft are coupled to each other, when there is a reduced pressure of pressurised hydraulic fluid in the intermediate chamber. Thus, in some examples, the locking component is arranged to be displaced by the balance of pressurised hydraulic fluid in the intermediate chamber and the biasing member, such that the inner input shaft and the outer input shaft are coupled or decoupled based on the pressure of the pressurised hydraulic fluid in the intermediate chamber.

For example, the locking component may be displaced in the first direction to the unlocked position, when the force from the pressurised hydraulic fluid in the intermediate chamber on the locking component is greater than the force on the locking member from the biasing member. For example, the locking component may be displaced in the second direction to the locked position, when the force from the pressurised hydraulic fluid in the intermediate chamber on the locking component is less than the force on the locking member from the biasing member.

In some examples, the actuator shaft comprises at least one locking ball. In some examples, the actuator shaft comprises at least one cavity. In some examples, the at least one locking ball is arranged to engage with the at least one cavity when the locking component is in the locked position.

In some examples, the locking component is arranged to displace the at least one locking ball. In some examples, the at least one locking ball is arranged to be displaced when the locking component is displaced. In some examples, the at least one locking ball is arranged to move reciprocally to engage with the least one cavity and disengage with the at least one cavity.

In some examples, the at least one ball is arranged to disengage with the at least one cavity when the locking component is in (e.g. displaced into) the unlocked position. In some examples, the at least one locking ball is arranged to disengage with the at least one cavity by moving radially inwards (e.g. towards the longitudinal axis and away from the at least one cavity) when the locking component is in the unlocked position.

In some examples, the at least one ball is arranged to engage with the at least one cavity when the locking component is in (e.g. displaced into) the locked position. In some examples, the at least one locking ball is arranged to engage with the at least one cavity by moving radially outwards (e.g. away from the longitudinal axis and at least partially into the at least one cavity) when the locking component is in the locked position.

By arranging the at least one locking ball to disengage with the at least one cavity when the locking component is in the unlocked position, the inner input shaft and the outer input shaft may be selectively decoupled when there is (e.g. an increased pressure of) pressurised hydraulic fluid in the intermediate chamber. By arranging the at least one locking ball to engage with the at least one cavity when the locking component is in the locked position, the inner input shaft and the outer input shaft may be selectively coupled when there is a reduced pressure of pressurised hydraulic fluid in the intermediate chamber.

In some examples, the inner input shaft comprises the at least one cavity. In some examples, the outer input shaft comprises the at least one cavity. In some examples, the inner input shaft and the outer input shaft comprise the at least one cavity.

In some examples, the inner input shaft comprises an inner input anti-friction coating. In some examples, the inner input anti-friction friction coating is a high velocity oxygen fuel (HVOF) coating. In some examples, the inner input anti-friction coating is a physical vapour deposition (PVD) coating. By providing the inner input shaft with the inner input anti-friction coating, the sliding friction between the inner input shaft and the outer input shaft may be reduced.

In some examples, the outer input shaft comprises an outer input anti-friction coating. In some examples, the outer input anti-friction friction coating is a high velocity oxygen fuel (HVOF) coating. In some examples, the outer input anti-friction coating is a physical vapour deposition (PVD) coating. By providing the outer input shaft with an outer input anti-friction coating, the sliding friction between the inner input shaft and the outer input shaft may be reduced.

In some examples, the actuator system comprises an output chamber conduit. In some examples, the output chamber conduit is coaxial with the longitudinal axis. In some examples, the diameter of output chamber conduit is less than the diameter of the actuator housing. In some examples, the actuator housing, the actuator shaft and the output chamber conduit form the output chamber. In some examples, the actuator housing, the actuator shaft, the second flange and the output chamber conduit form the output chamber. By arranging the output chamber conduit to form the output chamber, the volume of the output chamber may be increased.

In some examples, the output chamber comprises a third flange. In some examples, the third flange extends radially from the longitudinal axis. In some examples, the third flange is arranged to substantially separate the pressurised hydraulic fluid in the intermediate chamber and the pressurised hydraulic fluid in the output chamber. In some examples, the third flange is arranged to form a seal between the output chamber conduit and the actuator housing. By arranging the third flange between the intermediate chamber and the output chamber, the pressurised hydraulic fluid in the intermediate chamber may not mix with the pressurised hydraulic fluid in the output chamber. By arranging the third flange between the intermediate chamber and the output chamber, the pressurised hydraulic fluid in the intermediate chamber may be at a different pressure to the pressurised hydraulic fluid in the output chamber.

In some examples, the third flange comprises a third flange seal. In some examples, the third flange seal is arranged to form a seal between the output chamber conduit and the actuator housing. In some examples, the third flange seal is arranged to form a seal between the third flange and the actuator housing. In some examples, the third flange seal is a gasket. In some examples, the third flange seal is an O-ring.

In some examples, the second flange is arranged to form a seal between the actuator shaft and the output chamber conduit. In some examples, the second flange seal is arranged to form a seal between the actuator shaft and the output chamber conduit. By arranging the second flange between the actuator shaft and the output chamber conduit, the pressurised hydraulic fluid in the intermediate chamber may not mix with the pressurised hydraulic fluid in the output chamber. By arranging the second flange between the actuator shaft and the output chamber conduit, the pressurised hydraulic fluid in the intermediate chamber may be at a different pressure to the pressurised hydraulic fluid in the output chamber.

In some examples, the actuator housing, the actuator shaft, the second flange, the third flange and the output chamber form the output chamber.

In some examples, the actuator housing comprises an input end sealing component. In some examples, the input end sealing component is coaxial with the longitudinal axis. In some examples, the input end sealing component is arranged to form a seal between the actuator housing and the actuator shaft.

In some examples, the input end sealing component comprises at least one input end seal. In some examples, the input end sealing component comprises two input end seals. In some examples, the at least one input end seal is arranged to form a seal between the input end sealing component and the actuator shaft. In some examples, the at least one input end seal is a gasket. In some examples, the at least one input end seal is an O-ring.

In some examples, the input end sealing component comprises an input end scraper. In some examples, the input end scraper is arranged to form a seal between the input end sealing component and the actuator shaft. In some examples, the input end sealing component, the actuator housing and the actuator shaft form the input chamber.

In some examples, the actuator housing comprises an output end sealing component. In some examples, the output end sealing component is coaxial with the longitudinal axis. In some examples, the output end sealing component is arranged to form a seal between the actuator housing and the actuator shaft.

In some examples, the output end sealing component comprises at least one output end seal. In some examples, the output end sealing component comprises two output end seals. In some examples, the at least one output end seal is arranged to form a seal between the output end sealing component and the actuator shaft. In some examples, the at least one output end seal is a gasket. In some examples, the at least one output end seal is an O-ring.

In some examples, the output end sealing component comprises an output end scraper. In some examples, the output end scraper is arranged to form a seal between the output end sealing component and the actuator shaft. In some examples, the output end sealing component, the actuator housing and the actuator shaft are arranged to form the output chamber.

In some examples, the actuator housing is arranged to be coupled to the gimbal. In some examples, the gimbal is coaxial with the longitudinal axis. In some examples, the actuator housing and the gimbal are arranged such that the actuator housing and the gimbal rotate relative to each other about the longitudinal axis. In some examples, the gimbal is a component of a steering system of an aircraft. By coupling the actuator housing to the gimbal, the actuator housing may interact with other aircraft systems.

In some examples, the actuator housing comprises an input chamber inlet. In some examples, the input chamber is in fluid communication with the input chamber inlet. In some examples, the input chamber inlet is arranged to provide the pressurised hydraulic fluid to the input chamber. By arranging the input chamber in fluid communication with the input chamber inlet, the pressurised hydraulic fluid may be provided to the input chamber. By arranging the input chamber in fluid communication with the input chamber inlet, the pressurised hydraulic fluid in the input chamber may be pressurised.

In some examples, the actuator housing comprises an intermediates chamber inlet. In some examples, the intermediate chamber is in fluid communication with the intermediate chamber inlet. In some examples, the intermediate chamber inlet is arranged to provide the pressurised hydraulic fluid to the intermediate chamber. By arranging the intermediate chamber in fluid communication with the intermediate chamber inlet, the pressurised hydraulic fluid may be provided to the intermediate chamber. By arranging the intermediate chamber in fluid communication with the intermediate chamber inlet, the pressurised hydraulic fluid in the intermediate chamber may be pressurised.

In some examples, the actuator housing comprises an output chamber inlet. In some examples, the output chamber is in fluid communication with the output chamber inlet. In some examples, the output chamber inlet is arranged to provide the pressurised hydraulic fluid to the output chamber. By arranging the output chamber in fluid communication with the output chamber inlet, the pressurised hydraulic fluid may be provided to the output chamber. By arranging the output chamber in fluid communication with the output chamber inlet, the pressurised hydraulic fluid in the output chamber may be pressurised.

In some examples, the actuator shaft is a chrome-plating-free actuator shaft. In some examples, the actuator shaft is a cadmium-plating-free actuator shaft. In some examples, the actuator shaft comprises a HVOF coating. In some examples, the actuator shaft comprises a PVD coating.

In some examples, the actuator housing is a chrome-plating-free actuator housing. In some examples, the actuator housing is a cadmium-plating-free actuator housing. In some examples, the actuator housing comprises a HVOF coating. In some examples, the actuator housing comprises a PVD coating.

In some examples, the input end comprises the input connector. In some examples, the input connector is coaxial with the longitudinal axis. In some examples, the input connector is arranged to receive the input force. By providing the actuator shaft with an input connector, the actuator system may interact with other aircraft systems.

In some examples, the input connector comprises an input bearing. By providing an input bearing, the actuator system may interact with other aircraft systems.

In some examples, the output end comprises the output connector. In some examples, the output connector is coaxial with the longitudinal axis. By providing the actuator shaft with an output connector, the actuator system may interact with other aircraft systems.

In some examples, the output connector comprises an output bearing. By providing an output bearing, the actuator system may interact with other aircraft systems.

In some examples, the actuator system comprises a hydraulic bypass. In some examples, the hydraulic bypass is arranged to prevent hydraulic lock. In some examples, hydraulic lock is the position of the actuator shaft fixed relative to the actuator housing. In some examples, the hydraulic bypass is arranged to prevent hydraulic lock when the locking component is in the locking component closed position. In some examples, the hydraulic bypass is arranged to prevent hydraulic lock when the pressurised hydraulic fluid in the input chamber, the intermediate chamber and the output chamber is unpressurised, e.g. the pressure of the pressurised hydraulic fluid in the input chamber, the intermediate chamber and the output chamber is approximately atmospheric pressure.

In some examples, the hydraulic bypass is arranged to connect the pressurised hydraulic fluid in the input chamber, the intermediate chamber and the output chamber when the pressurised hydraulic fluid in the input chamber, the intermediate chamber and the output chamber is unpressurised, e.g. the pressure of the pressurised hydraulic fluid in the input chamber, the intermediate chamber and the output chamber is approximately atmospheric pressure. By providing a hydraulic bypass, the actuator shaft may still transfer an input force when the pressurised hydraulic fluid in the input chamber, the intermediate chamber and the output chamber is unpressurised.

In some examples, the actuator system in a steering system of an aircraft. In some examples, the actuator system is coupled to a pilot operated control via an input linkage. In some examples, the actuator system is coupled to a flap of an aircraft via an output linkage. In some examples, the actuator system is coupled to an aileron of an aircraft via an output linkage. In some examples, the actuator system is coupled to an elevator of an aircraft via an output linkage. In some examples, the actuator system is coupled to a moveable rudder surface of an aircraft via an output linkage.

### BRIEF DESCRIPTION OF INVENTION

One or more non-limiting examples will now be described, by way of example only, and with reference to the accompanying figures in which:
Figure 1 shows a cross-sectional view of an actuator system;
Figure 2 shows a cross-sectional view of an actuator system;
Figure 3 shows a cross-sectional view of an actuator system;
Figure 4 shows a cross-sectional view of an actuator system;
Figure 5 shows a cross-sectional view of a portion of an actuator system; and
Figures 6a and 6b show a cross-sectional view of portions of an actuator system.

### DETAILED DESCRIPTION

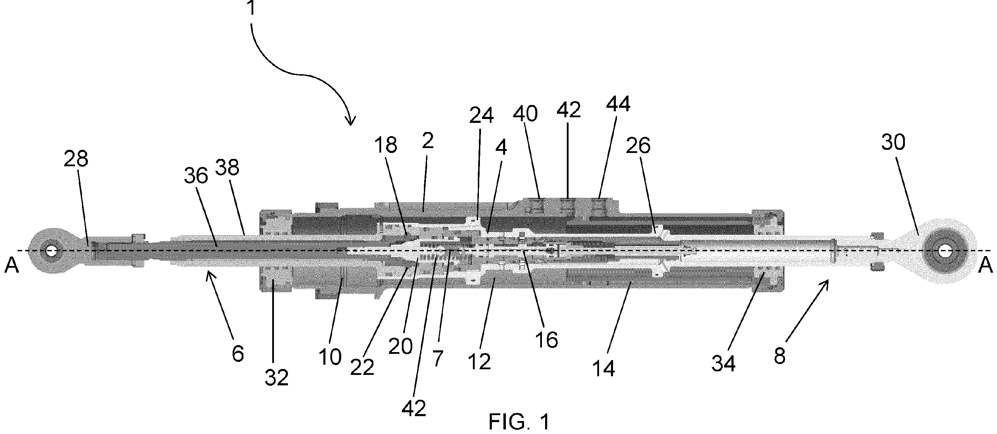

Figure 1 shows a cross-sectional view of an actuator system 1 of an aircraft.

The actuator system 1 has an actuator housing 2 and an actuator shaft 4. The actuator shaft 4 has an input end 6 and an output end 8. The actuator housing 2 and the actuator shaft 4 are arranged to form an input chamber 10, an intermediate chamber 12 and an output chamber 14, e.g. the actuator housing 2 and the actuator shaft 6 define between them the input chamber 10, the intermediate chamber 12 and the output chamber 14.

Each of the input chamber 10, the intermediate chamber 12 and the output chamber 14 contain a pressurised hydraulic fluid. The pressurised hydraulic fluid is supplied to the input chamber 10, the intermediate chamber 12 and the output chamber 14 from a pressurised hydraulic system (not shown) via an input chamber inlet 40, an intermediate chamber inlet 42 and an outlet chamber inlet 44.

The input chamber inlet 40 may connect the input chamber 10 to the pressurised hydraulic system. The intermediate chamber inlet 42 may connect the intermediate chamber 12 and the pressurised hydraulic system. The output chamber inlet 44 may connect the output chamber 14 and the pressurised hydraulic system. The pressurised hydraulic system is arranged to selectively control the relative pressure of the hydraulic fluid in the input chamber 10, the intermediate chamber 12 and the output chamber 14.

The actuator system 1 has a valve member 16. The actuator housing 2, the actuator shaft 4, the input chamber 10, the intermediate chamber 12, the output chamber and the valve member 16 are coaxial along a longitudinal axis A-A of the actuator system 1.

The input end 6 has an input end connector 28 for connecting the actuator system 1 to an aircraft system. The output end 8 has an output end connector 30 for connecting the actuator system 1 to an aircraft system. For example, the actuator system 1 may be used to connect a pilot operated control (connected to the input end 6) to a flap, an aileron, an elevator or a movable rudder surface (connected to the output end), e.g. via a linkage in a steering system of an aircraft.

The valve member 16 is coupled to the input end 6 via a centring connection 7. The valve member 16 is arranged to selectively control the flow of the pressurised hydraulic fluid between the input chamber 10, the intermediate chamber 12 and the output chamber 14. More specifically, the valve member 16 is arranged to selectively control the flow of the pressurised hydraulic fluid between the intermediate chamber 12 and the input chamber 10, and between the input chamber 10 and the output chamber 14.

The actuator shaft 4 has a first (radially extending) flange 24 and a second (radially extending) flange 26. The first flange 24, the actuator shaft 4 and the actuator housing 2 are arranged such that the first flange 24 extends radially from the actuator shaft 4 and contacts the (internal) wall of the actuator housing 2, to substantially separate the pressurised hydraulic fluid in the input chamber 10 from the pressurised hydraulic fluid in the intermediate chamber 12.

The second flange 26, the actuator shaft 4 and the actuator housing 2 are arranged such that the second flange 26 extends radially from the actuator shaft 4 and contacts the (internal) wall of the actuator housing 2, to substantially separate the pressurised hydraulic fluid in the intermediate chamber 12 from the pressurised hydraulic fluid in the output chamber 14.

The input end 6 has an inner input shaft 36 and an outer input shaft 38. The surfaces between the inner input shaft 36 and the outer input shaft 38 are arranged to slide over each other. The inner input shaft 36 and the outer input shaft 38 are arranged to each have an anti-friction coating. The anti-friction coating may be a high velocity oxygen fuel (HVOF) coating or a physical vapour deposition (PVD) coating.

The actuator housing 2 has an input end sealing component 32 and an output end sealing component 34. The input end sealing component 32 is proximal to the input end 6 and is arranged to provide a seal between the (outer input shaft 38 of the) input end 6 and the actuator housing 2, while allowing the (outer input shaft 38 of the) input end 6 to slide within the input end sealing component 32. The output end sealing component 34 is proximal to the output end 8 and is arranged to provide a seal between the output end 8 and the actuator housing 2, while allowing the output end 8 to slide within the output end sealing component 34.

The actuator system 1 has at least one ball 18 and a locking component 20. The locking component 20 is coaxial with the longitudinal axis A-A and is arranged to be movable reciprocally in the axial direction. The actuator shaft 4 has at least one cavity 22 (e.g. formed in the outer input shaft 38) arranged to correspond with the at least one ball 18. The locking component 20 is movable in the axial direction to engage or disengage with the least one ball 18 so to move the least one ball 18 in the radial direction, such that that the at least one ball 18 engages with or is released from the at least one cavity 22. The actuator system 1 has a biasing member 42 arranged to bias the locking component 20 towards a locking component closed position, e.g. to bias the locking component 20 such that the at least one ball 18 engages with the at least one cavity 22.

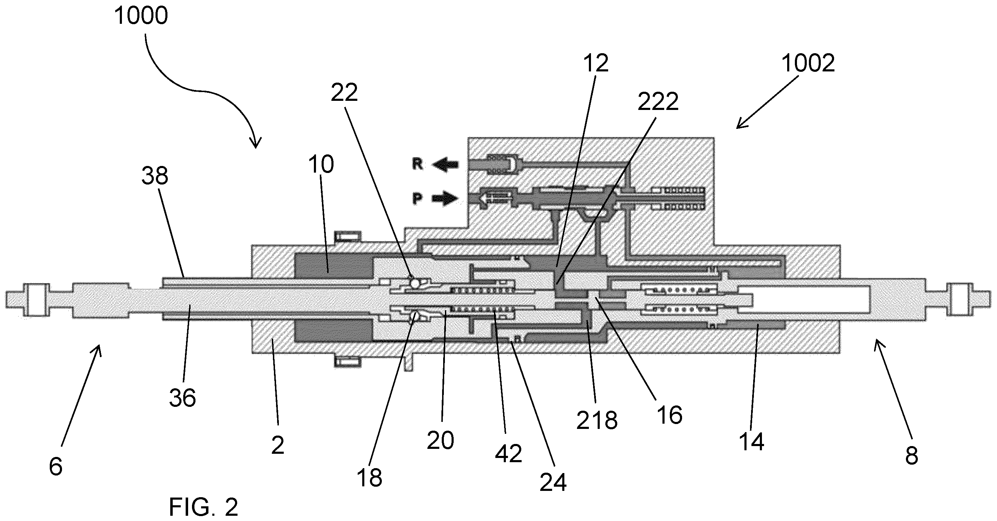

The operation of the actuator system 1 will now be described with reference to Figure 1 in addition to Figure 2, Figure 3 and Figure 4.

Figure 2, Figure 3 and Figure 4 show a cross-sectional view of an actuator system 1000 of an aircraft similar to the actuator system 1 shown in Figure 1. Actuator system 1000 is connected to a hydraulic system 1002.

When the pressurised hydraulic fluid in the actuator system 1 is pressurised, the intermediate chamber 12 may contain the pressurised hydraulic fluid at a pressure P. The input chamber 10 may contain the pressurised hydraulic fluid at a pressure of 0.5P and the output chamber 14 may contain the pressurised hydraulic fluid at atmospheric pressure.

The locking component 20 is arranged to be fluidly connected to the intermediate chamber 12. When the pressurised hydraulic fluid in the intermediate chamber 12 is pressurised, the locking component 20 is arranged to be displaced, by the pressure of the pressurised hydraulic fluid in the intermediate chamber 12 against the biasing force of the biasing member 42, along the longitudinal axis A-A towards the output end.

By displacing the locking component 20, the at least one locking ball 18 is released from the at least one cavity 22. By releasing the at least one locking ball 18 from the at least one cavity 22, the inner input shaft 36 and the outer input shaft 38 are able to slide relative to each other.

The input end 6 of the actuator shaft 4 is arranged to displace the valve member 16 when the at least one locking ball 18 is released from the at least one cavity 22 and an input force is applied to the input end 6 of the actuator shaft 4.

When an input force is applied in a first direction (e.g. in a direction towards the right of Figure 1) to the actuator shaft 4, the valve member 16 is displaced to the right (away from the input end 6, towards the output end 8). Similarly, when an input force is applied in a second direction (e.g. in a direction towards the left of Figure 1) to the actuator shaft 4, the valve member 16 is displaced to the left (towards the input end 6, away from the output end 8).

When an input force is in the rightwards direction (as shown in Figure 2), the input end 6 of the actuator shaft 4 moves to the right and the valve member 16 is moved to the right. By moving the valve member 16 to the right, the intermediate chamber 12 and the input chamber 10 become fluidly connected e.g. via an first fluid path 218 (as shown in Figure 2). Since the pressure in the intermediate chamber 12 is greater than the pressure in the input chamber 10, the pressurised hydraulic fluid flows from the intermediate chamber 12 to the input chamber 10.

The pressure in the input chamber 10 then increases and the resultant force on the first flange 24 is in a rightwards direction. The resultant force on the actuator shaft 4 is in the rightwards direction and the actuator shaft 4 then moves in the rightwards direction. By assisting the input force using selective communication of the intermediate chamber 12 and the input chamber 10, the force required to operate the actuator shaft 4 may be reduced.

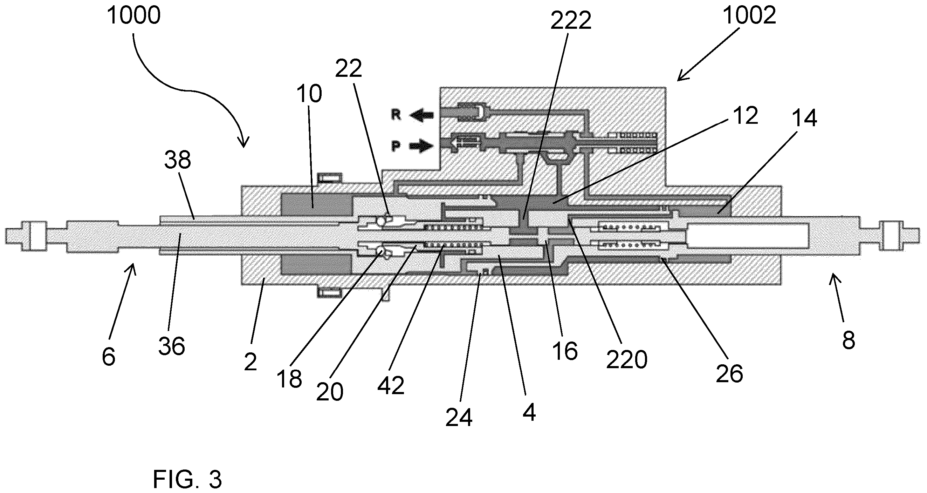

When the input force is in the leftwards direction (as shown in Figure 3), the input end 6 of the actuator shaft 4 moves to the left and the valve member 16 moves to the left. By moving the valve member 16 to the left, the input chamber 10 and the output chamber 14 become fluidly connected e.g. via a second fluid path (as shown in Figure 3). Since the pressure in the input chamber 10 is greater than the pressure in the output chamber 14, the pressurised hydraulic fluid flows from the input chamber 12 into the output chamber 14.

The pressure in the output chamber 14 increases and the resultant force on the second flange 26 is in the leftwards direction. The pressure in the input chamber 10 decreases and the resultant force on the first flange 24 is in the leftwards direction. The resultant force on the actuator shaft 4 is in the leftwards direction and the actuator shaft 4 then moves in the leftwards direction. By assisting the input force using the selective communication of the input chamber 10 and the output chamber 14, the force required to operate the actuator shaft 4 may be reduced.

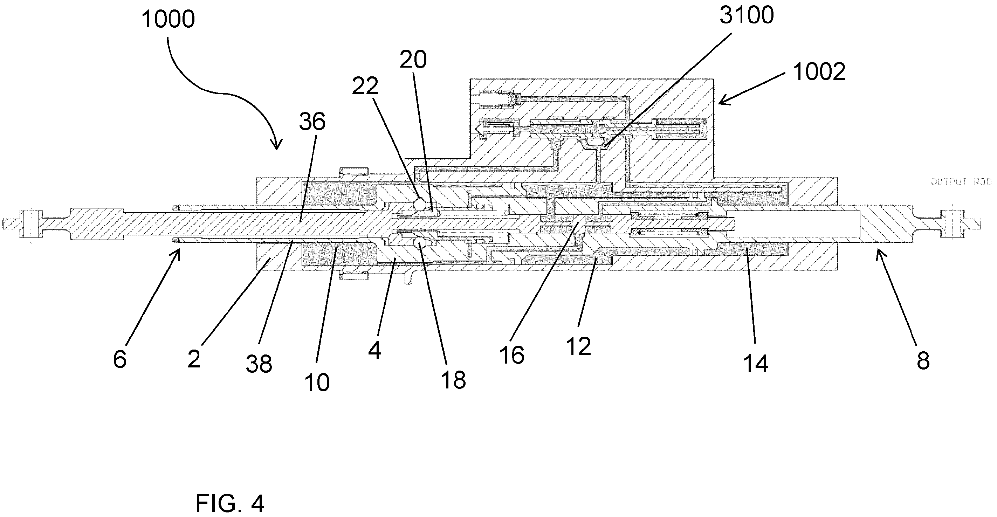

The actuator system 1 may operate even if the pressurised hydraulic fluid in the actuator system 1 is not pressurised (as shown in Figure 4).

When the pressurised hydraulic fluid in the actuator system 1 is not pressurised, the locking component 20 is biased closed by the biasing member 42. By biasing the locking component 20 closed, the at least one locking ball 18 engages with the at least one locking cavity 22 and the inner input shaft 36 and outer input shaft 38 become fixed relative to each other, e.g. the input end 6 is in a locked state. By fixing the inner input shaft 38 and the outer input shaft 38 relative to each other, the valve member 16 is arranged to block the flow of the pressurised hydraulic fluid between the input chamber 10, the intermediate chamber 12 and the output chamber 14.

When the input end 6 is in the locked state and receives an input force, the actuator shaft 4 moves relative to the actuator housing 2 in the direction of the input force, transferring the input force form the input end 6 to the output end 8 without amplification. The actuator system 1 has a hydraulic bypass 3100 (as shown in Figure 4) arranged to link the input chamber 10, the intermediate chamber 12 and the output chamber 14. By providing a hydraulic bypass 3100, the actuator system 1 may operate when the pressurised hydraulic fluid in the actuator system 1 is not pressurised. By providing a hydraulic bypass 3100, hydraulic locking of the actuator system 1 may be prevented.

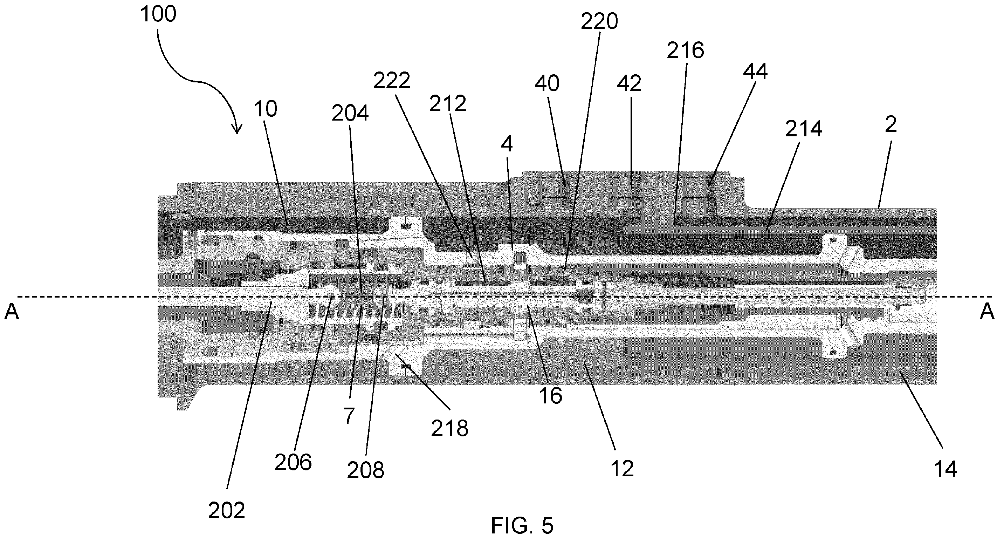

Figure 5 shows a cross-sectional view of a portion of an actuator system 100, similar to the actuator system 1 shown in Figure 1 and the actuator system 1000 shown in Figure 2, Figure 3 and Figure 4. Similar features in the actuator system 100 shown in Figure 5, the actuator system 1 shown in Figure 1and the actuator system 1000 shown in Figure 2, Figure 3 and Figure 4 are shown with the same reference numerals.

The inner input shaft 36 is coupled to an input rod 202. The input rod 202 is coupled to the centring connection 7. The centring connection 7 has a connector component 204. The connector component 204 has a first connecting pin 206. The first connecting pin 206, which extends in a direction perpendicular to the longitudinal axis A-A, is arranged to couple the input rod 202 and the connector component 204 and is arranged to allow rotation of the connector component 204 relative to the input rod 202 about the first connecting pin 206. This may provide a wider tolerance range for concentricity errors in the actuator system 100.

The connector component 204 also has a second connecting pin 208. The second connecting pin 206, which extends in a direction perpendicular to the longitudinal axis A-A and to the first connecting pin 206, is arranged to couple the input rod 202 to valve member 16. The second connecting pin 208 is arranged to allow rotation of the connector component 204 relative to the valve member 16 about the second connecting pin 208. By coupling the connector component 204 and the valve member 16 via the second connecting pin 208, the centring connection 7 may provide a wider tolerance range for concentricity errors in the actuator system 100.

An internal valve chamber 212 is defined between the actuator shaft 4 and the valve member 16. The internal valve chamber 212 is arranged in selective fluid communication with the input chamber 10, the intermediate chamber 12 and the output chamber 14, such that displacement of the valve member 16 is arranged to control the fluid communication between the input chamber 10, the intermediate chamber 12 and the output chamber 14. A first fluid path 218 is defined in the actuator shaft 4 to selectively fluidly connect the internal valve chamber 212 and the input chamber 10. A second fluid path 220 is defined in the actuator shaft 4 to selectively fluidly connect the input chamber 10 and the output chamber 14. The internal valve chamber 212 is connected to the intermediate chamber 12 via a third fluid path 222.

The valve member 16 and the internal valve chamber 212 are arranged such that when the valve member 16 is moved in the rightwards direction along the longitudinal axis A-A, the first fluid path 218 is opened and the pressurised hydraulic fluid in the intermediate chamber 12 may flow into the input chamber 10, when the pressurised hydraulic fluid in the intermediate chamber 12 has a pressure greater than the pressurised hydraulic fluid in the input chamber 10. The valve member 16 and the internal valve chamber 212 are arranged such that when the valve member 16 is moved in a leftwards direction along the longitudinal axis A-A, the second fluid path 220 is opened, and the pressurised hydraulic fluid in the input chamber 10 may flow into the output chamber 14, when the pressurised hydraulic fluid in the input chamber 10 has a pressure greater than the pressurised hydraulic fluid in the output chamber 14.

The actuator system 100 has an output chamber conduit 214. The output chamber conduit 214 has a third flange 216. The third flange 216, the actuator shaft 4, output chamber conduit 214 and the actuator housing 2 are arranged such that the third flange 216 substantially separates the pressurised hydraulic fluid in the intermediate chamber 12 and the pressurised hydraulic fluid in the output chamber 14.

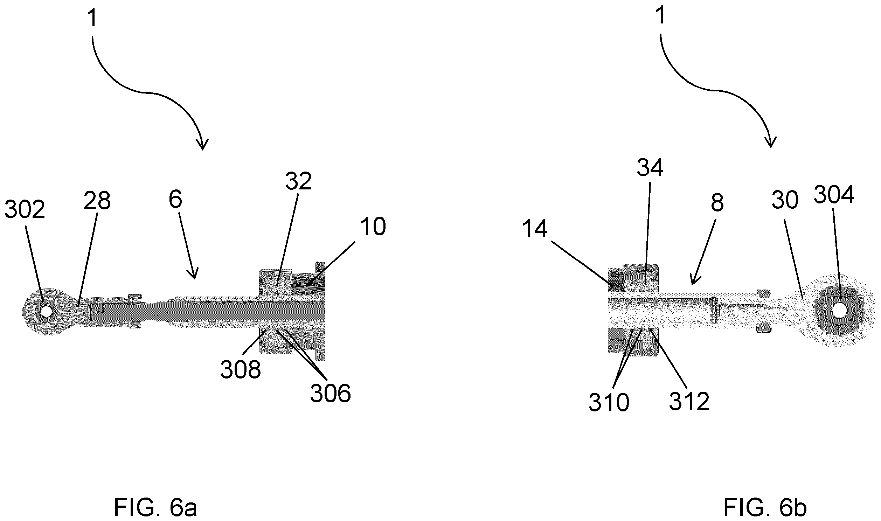

Figures 6a and 6b show a cross-sectional view of portions of the actuator system 1 shown in Figure 1.

Figure 6a shows a cross sectional portion of the input end 6.

The input end connector 28 has an input end bearing 302 for connecting the actuator system 1 to an aircraft system.

The input end sealing component 32 has two input end seals 306 and an input end scraper 308. The input end sealing component 32 seals the pressurised hydraulic fluid in the input chamber 10. By providing two input end seals 306 the sealing of the pressurised hydraulic fluid in the input chamber 10 may be improved. By providing an input end scraper 308, the sealing of the pressurised hydraulic fluid in the input chamber 10 may be improved.

Figure 6b shows a cross sectional portion of the output end 8.

The output end connector 30 has an output end bearing 304 for connecting the actuator system 1 to an aircraft system.

The output end sealing component 34 has two output end seals 310 and an output end scraper 312. The output end sealing component 34 is seals the pressurised hydraulic fluid in the output chamber 14. By providing two output end seals 310 the sealing of the pressurised hydraulic fluid in the output chamber 14 may be improved. By providing an output end scraper 312, the sealing of the pressurised hydraulic fluid in the output chamber 14 may be improved.

## Claims

1. An actuator system of an aircraft, the actuator system comprising:
an actuator shaft;
wherein the actuator shaft comprises an input end and an output end;
wherein the input end of the actuator shaft is arranged to receive an input force; and
an actuator housing;
wherein the actuator shaft and the actuator housing are coaxial along a longitudinal axis;
wherein the actuator shaft and the actuator housing are arranged to form an input chamber, an intermediate chamber and an output chamber;
wherein the input chamber, the intermediate chamber and the output chamber are each arranged to contain a pressurised hydraulic fluid; wherein the actuator system further comprises:
a valve member;
wherein the valve member is coupled to the input end of the actuator shaft via a centring connection;
wherein the centring connection is arranged to accommodate misalignment between the input end and the valve member;
wherein the valve member is arranged to selectively control the flow of the pressurised hydraulic fluid between the input chamber, intermediate chamber and the output chamber based on the input force.

2. The actuator system as claimed in claim 1, wherein the input chamber, the intermediate chamber and the output chamber are coaxial with the actuator shaft; and
wherein the input chamber, the intermediate chamber and the output chamber extend circumferentially about the actuator shaft with an annular cross section.

3. The actuator system as claimed in claim 1 or 2, wherein the input chamber, the intermediate chamber and the output chamber are axially adjacent along the longitudinal axis;
wherein the input chamber is arranged proximal to the input end;
wherein the output chamber is arranged proximal to the output end; and
wherein the intermediate chamber is arranged between the input chamber and the output chamber.

4. The actuator system as claimed in any one of the preceding claims, wherein the centring connection comprises a connector component and a first connecting pin;
wherein the first connecting pin couples the input end and the connector component; and
wherein the connector component is arranged to rotate about the first connecting pin.

5. The actuator system as claimed in claim 4, wherein the centring connection comprises a second connecting pin;
wherein the second connecting pin couples the connector component and the valve member; and
wherein the connector component is arranged to rotate about the second connecting pin.

6. The actuator system as claimed in any one of the preceding claims, wherein the valve member is arranged to selectively couple the pressurised hydraulic fluid in the input chamber and the pressurised hydraulic fluid in the intermediate chamber when the input force is in a first direction.

7. The actuator system as claimed in any one of the preceding claims, wherein the valve member is arranged to selectively couple the pressurised hydraulic fluid in the input chamber and the pressurised hydraulic fluid in the output chamber when the input force is in a second direction.

8. The actuator system as claimed in any one of the preceding claims, wherein the actuator shaft comprises an internal valve chamber in selective fluid communication with the input chamber, the intermediate chamber and the output chamber;
wherein the actuator shaft further comprises:
a first fluid path;
wherein the first fluid path is arranged to selectively fluidly connect the internal valve chamber and the input chamber; and
a second fluid path;
wherein the second fluid path is arranged to selectively fluidly connect the input chamber and the output chamber.

9. The actuator system as claimed in any one of the preceding claims, wherein the input end comprises an inner input shaft and an outer input shaft;
wherein the inner input shaft is coupled to the valve member.

10. The actuator system as claimed in claim 9, wherein the actuator system comprises a locking component;
wherein the locking component is arranged to move reciprocally between a locked position and an unlocked position.

11. The actuator system as claimed in claim 10, wherein the inner input shaft and the outer input shaft are arranged to be fixed relative to each other when the locking component is in the locked position; and
wherein the inner input shaft and the outer input shaft are arranged to slide relative to each other when the locking component is in the unlocked position.

12. The actuator system as claimed in claim 10 or 11, wherein the actuator shaft comprises a biasing member;
wherein the biasing member is arranged to bias the locking component towards a locked position; and
wherein the locking component is arranged to be displaced towards the unlocked position by the pressurised hydraulic fluid in the intermediate chamber.

13. The actuator system as claimed in claim 9, 11 or 12, wherein the inner input shaft and the outer input shaft comprise an anti-friction coating.

14. The actuator system as claimed in claim 13, wherein the anti-friction coating is a high velocity oxygen fuel coating or a physical vapour deposition coating.

15. An actuator system of an aircraft, the actuator system comprising:
an actuator shaft;
wherein the actuator shaft comprises an input end and an output end;
an actuator housing;
wherein the actuator shaft and the actuator housing are coaxial with a longitudinal axis;
wherein the actuator shaft and the actuator housing are arranged to form an input chamber, an intermediate chamber and an output chamber; and
a valve member;
wherein the valve member is coupled to the input end of the actuator shaft via a centring connection;
wherein the centring connection is arranged to accommodate
misalignment between the input end and the valve member;
the method comprising:
the actuator shaft receiving an input force;
the input chamber, the intermediate chamber and the output chamber containing a pressurised hydraulic fluid; and
the valve member selectively controlling the flow of the pressurised hydraulic fluid between the input chamber, intermediate chamber and the output chamber based on the input force.
